(19) Europäisches Patentamt / European Patent Office / Office européen des brevets

(11) **EP 4 627 903 A1**

(12) **EUROPEAN PATENT APPLICATION**

(43) Date of publication:
**08.10.2025 Bulletin 2025/41**

(21) Application number: **25161444.2**

(22) Date of filing: **04.03.2025**

(51) International Patent Classification (IPC):
**A01C 21/00** $^{(2006.01)}$

(52) Cooperative Patent Classification (CPC):
**A01C 21/007**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.03.2024 IN 202421016167**

(71) Applicant: **Tata Consultancy Services Limited Maharashtra (IN)**

(72) Inventors:
• **KULAT, Rushikesh Dattatraya**
  **400601 Thane (West), Maharashtra (IN)**

• **SARANGI, Sanat**
  **400601 Thane (West), Maharashtra (IN)**
• **SAKKAN, Mariappan**
  **600113 Chennai, Tamil Nadu (IN)**
• **PAPPULA, Srinivasu**
  **500081 Hyderabad, Telangana (IN)**
• **JAIN, Prachin Lalit**
  **400601 Thane (West), Maharashtra (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR REAL-TIME ESTIMATION OF SOIL ORGANIC-CARBON WITH MULTIMODAL SENSING OF CROP FIELDS**

(57) This disclosure relates generally to method and system for real time estimation of soil organic-carbon with multimodal sensing of crop fields. Estimating soil organic carbon is affected by various factors on the farm with available nutrients in the soil and agricultural management practices followed by farmers. Existing soil testing methods are time consuming and complex. The method initially computes a soil nitrogen level of the target crop field based on geo-spatial profile of neighboring crop field. Here, a plurality of features comprising a tillage, one or more crop remnants, and a crop maturity stage from the plurality of digital images are identified to determine at least one of a carbon-nitrogen relationship segment comprising a C-N segment 1, a C-N segment 2 and a C-N segment 3 of the target crop field. Based on the C-N segment, an organic carbon level of the target crop field is estimated.

FIG. 1

EP 4 627 903 A1

**Description**

CROSS-REFERENCE TO RELATED APPLICATIONS AND PRIORITY

The present application claims priority to Indian application no. 202421016167, filed on March 07, 2024.

TECHNICAL FIELD

The disclosure herein generally relates to soil organic-carbon estimation, and, more particularly, to method and system for real-time estimation of soil organic-carbon with multimodal sensing of crop fields.

BACKGROUND

Nutrients are essential in the growth and development of crops. Crops absorb nutrients such as nitrogen, phosphorus, and potassium in the surrounding soil to facilitate crop growth. Different types of crops have different requirements for each nutrient. When a crop is unable to meet its nutrient needs, the crop suffers. For example, a lack of nitrogen may lead to destruction of a crop's leaves. Additionally, once the nitrogen concentration in a plant decreases below a critical threshold, photosynthesis and dry matter accumulation is negatively impacted. An end result is that the yield of a crop which does not receive enough nutrients is decreased.

While nutrients in the soil are important to plant growth, it is difficult to determine when soil lacks one or more nutrients without performing nutrient tests. Additionally, the impact of a specific nutrient application is not readily apparent. Soil organic matter plays a major role in regulating soil health, crop health and other ecosystem services. Soil organic carbon (SOC) is an essential part of global carbon cycle and one of the most significant soil parameters ensuring proper crop health. SOC concentration depends on various factors such as soil type, climate, topography, and soil management practices. SOC is greatly influenced by vegetation through the organic matter input and consequently, land use change is one of the most important factors which impacts SOC stock increase or decrease.

Traditional soil organic carbon measurements are time consuming and laborious. Such measurements require frequent soil testing with laboratory methods which is tedious. Further, traditional techniques lack in considering temporal segmentation of farm based on various operations and its effect. Also, other traditional contactless SOC estimation methods lack in consideration of volatility in soil profile during active crop period, ambient conditions, agricultural practices followed and other parameters on the farm.

SUMMARY

Embodiments of the present disclosure present technological improvements as solutions to one or more of the above-mentioned technical problems recognized by the inventors in conventional systems. For example, in one embodiment, a system for real-time estimation of soil organic-carbon with multimodal sensing of crop fields is provided. The system includes to receive a plurality of digital images of a target crop field captured via an image capturing device, a location of the target crop field, and a vegetation indices over two or more previous cropping cycles, wherein the plurality of digital images provides soil information and crops growing in the field. Further, a soil nitrogen level of the target crop field is computed based on geo-spatial profile of neighboring crop field with similar cropping pattern, and the location of the target crop field. Further, a plurality of features comprising a tillage, one or more crop remnants, and a crop maturity stage of the target crop field from the plurality of digital images are identified. Then, at least one of a carbon-nitrogen relationship segment comprising a C-N segment 1, a C-N segment 2 and a C-N segment 3 of the target crop field from the plurality of features are determined. The C-N segment 1 is an indicative of (i) presence of tillage and (ii) less or no fraction of crop remnants in the crop field. The C-N segment 2 is an indicative of unmatured crop growing in the crop field. The C-N segment 3 is an indicative as at least one of: (i) presence of less fraction or no fraction of crop remnants and no tillage, (ii) presence of large fraction of crop remnants and, (iii) presence of matured crop in the crop field. Finally, an organic carbon level of the target crop field is estimated based on at least one of carbon-nitrogen relationship segments.

In another aspect, a method for real-time estimation of soil organic-carbon with multimodal sensing of crop fields is provided. The method includes to receive a plurality of digital images of a target crop field captured via an image capturing device, a location of the target crop field, and a vegetation indices over two or more previous cropping cycles, wherein the plurality of digital images provides soil information and crops growing in the field. Further, a soil nitrogen level of the target crop field is computed based on geo-spatial profile of neighboring crop field with similar cropping pattern, and the location of the target crop field. Further, a plurality of features comprising a tillage, one or more crop remnants, and a crop maturity stage of the target crop field from the plurality of digital images are identified. Then, at least one of a carbon-nitrogen relationship segment comprising a C-N segment 1, a C-N segment 2 and a C-N segment 3 of the target crop field from the plurality of features are determined. The C-N segment 1 is an indicative of (i) presence of tillage and (ii) less or no fraction of crop remnants in the crop field. The C-N segment 2 is an indicative of unmatured crop growing in the crop field. The C-N segment 3 is an indicative as at least one of: (i) presence of less fraction or no fraction of crop remnants and no tillage, (ii) presence of large fraction of crop remnants and, (iii) presence of matured crop in the crop field. Finally, an organic carbon level of the target crop field is estimated based on at least one of carbon-nitrogen relationship segments.

In yet another aspect, a non-transitory computer readable medium for to receive a plurality of digital images of a target crop field captured via an image capturing device, a location of the target crop field, and a vegetation indices over two or more previous cropping cycles, wherein the plurality of digital images provides soil information and crops growing in the field. Further, a soil nitrogen level of the target crop field is computed based on geo-spatial profile of neighboring crop field with similar cropping pattern, and the location of the target crop field. Further, a plurality of features comprising a tillage, one or more crop remnants, and a crop maturity stage of the target crop field from the plurality of digital images are identified. Then, at least one of a carbon-nitrogen relationship segment comprising a C-N segment 1, a C-N segment 2 and a C-N segment 3 of the target crop field from the plurality of features are determined. The C-N segment 1 is an indicative of (i) presence of tillage and (ii) less or no fraction of crop remnants in the crop field. The C-N segment 2 is an indicative of unmatured crop growing in the crop field. The C-N segment 3 is an indicative as at least one of: (i) presence of less fraction or no fraction of crop remnants and no tillage, (ii) presence of large fraction of crop remnants and, (iii) presence of matured crop in the crop field. Finally, an organic carbon level of the target crop field is estimated based on at least one of carbon-nitrogen relationship segments.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 is a schematic view of an environment where a system is deployed for estimation of soil organic carbon with multimodal sensing of crop fields, in accordance with some embodiments of the present disclosure.
FIG.2 is a functional block diagram of a system for estimation of soil organic carbon with multimodal sensing of crop fields, in accordance with some embodiments of the present disclosure.
FIG.3 is a flow diagram illustrating a method for FIG.2 depicts process flow of the system for of soil organic carbon with multimodal sensing of crop fields, in accordance with some embodiments of the present disclosure.
FIG.4A depicts a use case example of soil organic-carbon estimation using the system of FIG.2, in accordance with some embodiments of the present disclosure, in accordance with some embodiments of the present disclosure.
FIG.4B depicts computation of soil nitrogen using the system of FIG.2, in accordance with some embodiments of the present disclosure, in accordance with some embodiments of the present disclosure.
FIG.4C depicts computation of C-N segment-1 using the system of FIG.2, in accordance with some embodiments of the present disclosure, in accordance with some embodiments of the present disclosure.
FIG.4D depicts computation of C-N segment-2 using the system of FIG.2, in accordance with some embodiments of the present disclosure, in accordance with some embodiments of the present disclosure.
FIG.4E depicts computation of C-N segment-3 using the system of FIG.2, in accordance with some embodiments of the present disclosure, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Soil organic carbon (SOC) is a vital component for sustainable agriculture production. SOC governs the soil health and helps farmers to take decisions regarding their agricultural operations such as fertilization to maintain soil health. Soil organic carbon is affected by various factors on the farm, prominent factors being available nutrients in the soil and agricultural management practices followed by farmers. The current soil testing method requires is time consuming and requires more resources to estimate the soil organic carbon in soil. SOC is predicted using data gathered through phone sensors on farms and current soil nitrogen and soil organic carbon are estimated based on specific carbon nitrogen (C-N) relationship segments.

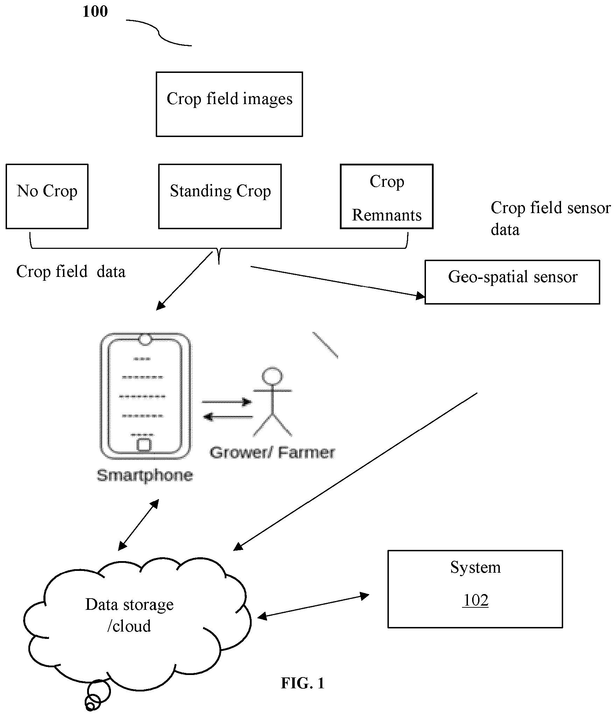

The embodiments herein provide a method and system for real-time estimation of soil organic carbon with multimodal sensing of crop fields. The disclosed method is an efficient, accurate and scalable system to estimate soil health. The method provides reliable estimation of soil organic carbon in farmer's agricultural field at all cropping stages including in-season periods where organic carbon levels are volatile. Here, soil organic carbon is estimated based on temporal distribution of carbon and nitrogen relationship into various segments based on farm or agriculture field condition and its corresponding operations via phone-augmented sensors. Moreover, the method of estimating SOC is cost-effective with reduced time considering various parameters affecting the soil organic carbon such as active crop period, ambient condition of agriculture field, and various farm operations. However, the disclosed system is further explained with the novel method as described in conjunction with FIG. 1 to FIG.4E below.

Referring now to the drawings, and more particularly to FIG. 1 through FIG.4E, where similar reference characters denote corresponding features consistently throughout the figures, there are shown preferred embodiments, and these embodiments are described in the context of the following exemplary system and/or method.

FIG. 1 is a schematic view of an environment where a system is deployed for estimation of soil organic carbon with multimodal sensing of crop fields, in accordance with some embodiments of the present disclosure.

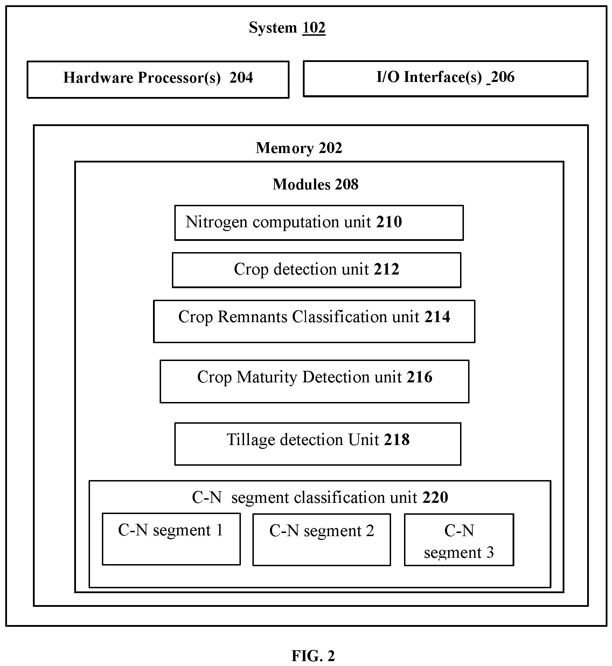

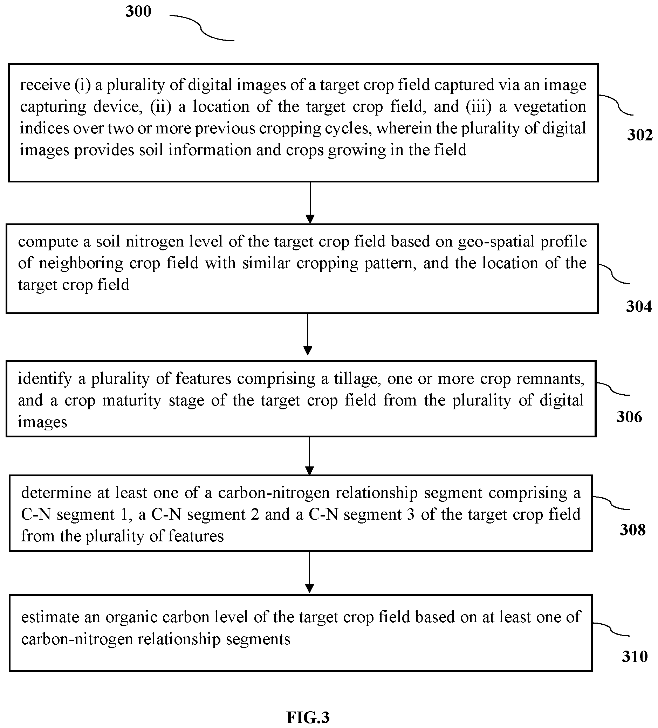

The FIG. 1 depicts a plurality of fields, each field also referred to as agriculture field of interest. Geo-spatial sensor captures agriculture field data and neighboring field data as reference for an area of coverage. The coverage area includes the plurality of agriculture field comprising one or more growing crops. The system 102, with known in the art techniques tag the geographical location of agriculture crop fields to identify boundaries of each field of interest. Additionally, each field has onsite sensor deployed on mobile devices that directly communicate with a cloud server and associated mobile devices through which respective farmers or landowners update information related to various events taking place on the agriculture field of interest into the cloud server. All information generated at plurality of resources such as sensors on the field, geo spatial data, current growing crop, crop growth stage, domain knowledge, meteorological data corresponding to each agriculture field of the farmer is stored in the cloud server for every crop. The system also records using the information on crops grown in the region, neighboring crop fields, crop growth stage, pesticides, regional sowing and harvesting patterns and the like. The system 102 is further explained with respect to FIG.2 through FIG.4E and method depicted in flow diagram of FIG.3.

FIG.2 is a functional block diagram of a system for estimation of soil organic carbon with multimodal sensing of crop fields, in accordance with some embodiments of the present disclosure. In an embodiment, the system 102 includes a processor(s) 204, communication interface device(s), alternatively referred as input/output (I/O) interface(s) 206, and one or more data storage devices or a memory 202 operatively coupled to the processor(s) 204. The system 102 with one or more hardware processors is configured to execute functions of one or more functional blocks of the system 102.

Referring to the components of the system 102, in an embodiment, the processor(s) 204, can be one or more hardware processors 204. In an embodiment, the one or more hardware processors 204 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 204 are configured to fetch and execute computer-readable instructions stored in the memory 202. In an embodiment, the system 102 can be implemented in a variety of computing systems including laptop computers, notebooks, hand-held devices such as mobile phones, workstations, mainframe computers, servers, and the like.

The I/O interface(s) 206 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 206 can include one or more ports for connecting to a number of external devices or to another server or devices.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 202 includes a plurality of modules 208 comprising a Nitrogen computation unit 210 for computing soil nitrogen content in real time, a crop detection unit 212 for detecting the crop currently growing in the crop field, a crop remnants classification unit 214 for detecting and classifying crop remnants, a crop maturity detection unit 216 detects maturity stage of the crop, a tillage detection unit 218 detects current tillage in the growing crop, a C-N segment classification unit 220 comprising a C-N segment 1 220a, a C-N segment 2 220b, a C-N segment 3 222c computes organic carbon using the presence of soil nitrogen.

The plurality of modules 210 include programs or coded instructions that supplement applications or functions performed by the system 102 for executing different steps involved in the process of estimation of soil organic carbon, being performed by the system 102. The plurality of modules 210, amongst other things, can include routines, programs, objects, components, and data structures, which performs particular tasks or implement particular abstract data types. The plurality of modules 210 may also be used as, signal processor(s), node machine(s), logic circuitries, and/or any other device or component that manipulates signals based on operational instructions. Further, the plurality of modules 210 can be used by hardware, by computer-readable instructions executed by the one or more hardware processors 104, or by a combination thereof. The plurality of modules 210 can include various sub-modules (not shown).

Further, the memory 102 may comprise information pertaining to input(s)/output(s) of each step performed by the processor(s) 104 of the system 102 and methods of the present disclosure. Further, the memory 202 includes a database 208. Although the database 208 is shown internal to the system 102, it will be noted that, in alternate embodiments, the database 208 can also be implemented external to the system 102, and communicatively coupled to the system 102. The data contained within such external database may be periodically updated. For example, new data may be added into the database (not shown in FIG.2) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 102 are now explained with reference to FIG.2 through steps of flow diagram in FIG.3.

FIG.3 is a flow diagram illustrating a method for FIG.2 depicts process flow of the system for of soil organic carbon with multimodal sensing of crop fields, in accordance with some embodiments of the present disclosure.

In an embodiment, the system 100 comprises one or more data storage devices or the memory 102 operatively coupled to the processor(s) 104 and is configured to store instructions for execution of steps of a method 300 by the processor(s) or one or more hardware processors 104. The steps of the method 300 of the present disclosure will now be explained with reference to the components or blocks of the system 100 as depicted in FIG. 1 through FIG.2, and the steps of flow diagram as depicted in FIG.3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 300, at step 302 a one or more hardware processors is configured to receive a plurality of digital images of a target crop field captured via an image capturing device, (ii) a location of the target crop field, and (iii) a vegetation indices over two or more previous cropping cycles, wherein the plurality of digital images provides soil information and crops growing in the field.

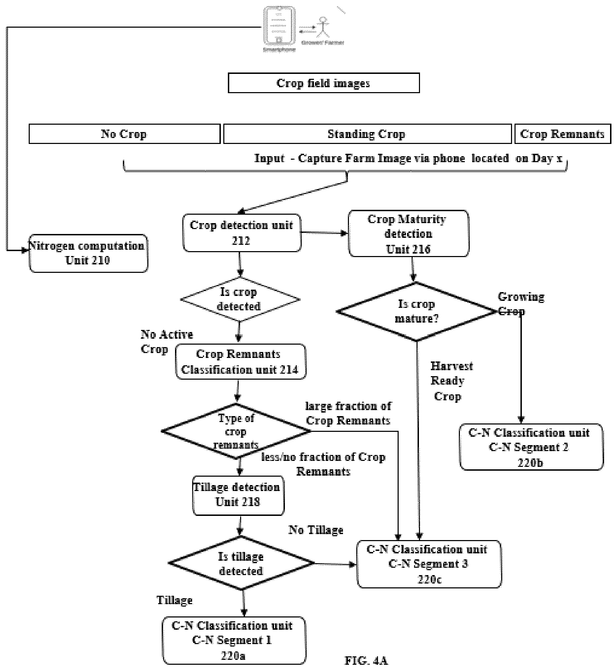

Considering an example (FIG.4A) where the farmer queries the system 102 to provide estimated soil organic carbon content for the target crop field Initially, the farmer reaches the target crop field and captures the plurality of digital images of the target crop field via an image capturing device for example mobile phone. The target crop field may have different stages comprising a no crop stage, a standing crop stage, and a matured crop stage. For example, the crop may be rice, wheat, soyabean and the like. The no crop stage refers to non-existence crop stage. The standing crop stage refers to the crop grown but not matured. The matured crop stage refers to the crop in maturity stage.

At step 304 of the method 300, the one or more hardware processors is configured to compute a soil nitrogen level of the target crop field based on geo-spatial profile of neighboring crop field with similar cropping pattern, and the location of the target crop field.

Referring again to the above example FIG.4A, the geo-spatial sensor captures geo-spatial sensor data of the area of coverage. The area of coverage is collectively referred as the farmers target crop field having crops and the neighboring crop field. The geo-spatial sensor obtains the geo-spatial profile of the neighboring crop field and the farmers target crop field. The geo-spatial profile provides information related to similar cropping pattern of neighboring field as reference to the farmer.

Further, the soil nitrogen of the target crop field is estimated by computing Nitrogen from spatial soil profile of neighboring field with similar cropping pattern where correlation between one or more farms are calculated based on cropping pattern assessed by a correlation score calculated based on historical database of (vegetation) indices. The historical database is utilized to obtain a degree of similarity in cropping patterns throughout the period and Nitrogen is computed using weighted approach based on distance and correlation score of the farm with neighboring farm as in Equation 1,

$$N = avg\,(N1 * W1 + N2 * W2 \ldots + Nx * Wx)/\Sigma(W1, W2 .. Wx)$$

--- Equation 1

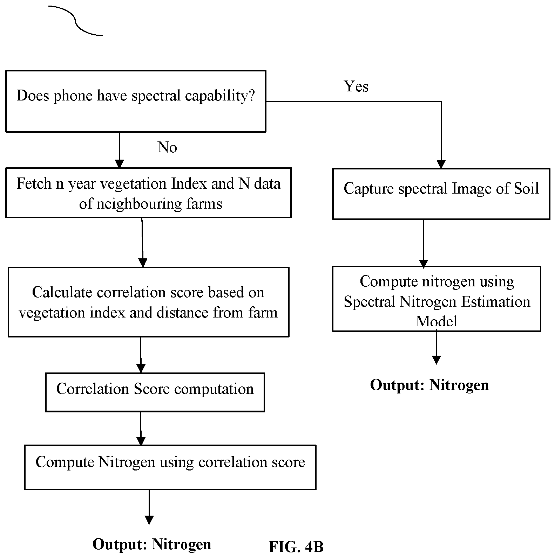

For the above example FIG.4A soil nitrogen of the target crop field is estimated using the steps mentioned below and as referred in FIG.4B.

The Nitrogen computation unit 210 computes the soil Nitrogen of the target crop field by obtaining a plurality of vegetative indices of two or more neighboring crop fields from a historical database and a vegetative index of the target crop field. The historical database is a repository comprising at least one year crop vegetation information. Further, a plurality of cropping patterns of two or more neighboring crop fields matching with a target cropping pattern of the target crop field. Match between cropping patterns are determined based on the plurality of vegetative indices. Then, a degree of similarity between each cropping pattern of two or more neighboring crop fields with the target cropping pattern is determined to calculate a plurality of correlation scores.

Further, the plurality of correlation scores are calculated based on the variance between each cropping pattern of each neighboring crop field with the target crop field. Further, two or more neighboring crop field where each correlation score is greater than a first predefined threshold is selected, and a monotonic relationship is calculated when the two or more selected neighboring crop field are within a second predefined threshold. The first predefined threshold is 0.8 The second predefined threshold is 0.7 or -0.7 Furthermore, the soil nitrogen level for the target crop field is computed based on the nitrogen level of each selected neighboring crop field having monotonic relationship with corresponding weight. Here, each weight is the distance between each neighboring crop field and the target crop field.

In one embodiment, Nitrogen estimation is not limited by computing the above steps. For example, if the phone is capable of capturing spectral images where the phone estimates Nitrogen level of the target crop field based on spectral band of the spectral images.

At step 306 of the method 300, the one or more hardware processors is configured to identify a plurality of features comprising a tillage, one or more crop remnants, and a crop maturity stage of the target crop field from the plurality of digital images.

Referring now to FIG.4A, once the geo-spatial profile is obtained, the plurality of digital images are further analyzed to identify the current crop growing stage of the crop FIG.4A depicts example of no crop stage, the standing crop stage, and the matured crop stage.

The crop detection unit 212 detects active crop by analyzing the plurality of digital images matching with similar crop digital images stored in the historical database. The crop detection unit 212 detects if the active crop is being detected in the target crop field, such area of coverage crops are classified as crops detected area of interests which are further fed as input to the crop maturity detection unit 214.

The crop maturity detection unit 214 obtains the area of coverage having crops to further classify it as matured crops or unmatured crops. The matured crops are referred as ready to harvest crops, and the unmatured crops are referred as growing crops.

The crop remnants classification unit 214 detects soil and biomass mask by computing color ratio of biomass. The fraction of image area or pixels covered by biomass is then computed to classify crop remnants.

The tillage detection unit 216 segments the image and only keeps the soil mask. Features such as soil color and soil textures are detected by model to classify land in no tillage or tillage class.

Now referring to the steps of the method 300, at step 308 the one or more hardware processors is configured to determine at least one of a carbon-nitrogen (C-N) relationship segments comprising a C-N segment-1, a C-N segment-2 and a C-N segment-3 of the target crop field from the plurality of features.

Referring again to FIG.4A, based on the current crop growing stage each of the area of coverage of agriculture field may be classified into either one of the C-N segment-1, the C-N segment-2 and the C-N segment-3. The C-N relationship segments are governed by various type of farm activities or land utilization at different points of time and person visiting the farm may find the farm in any of the following situations,

(a) Farmland with growing crop
(b) Farmland with no active crop
(c) Farmland with harvest ready crop
(d) Farmland with no or less fraction of crop remnants
(e) Farmland with large fraction of crop remnants
(f) Farmland with tillage activity

The C-N relationship segments partitions the farm into different timeframes based on its cropping cycle, operations, and the degree of volatility in soil organic carbon (SOC) and nitrogen along with the relationship between them.

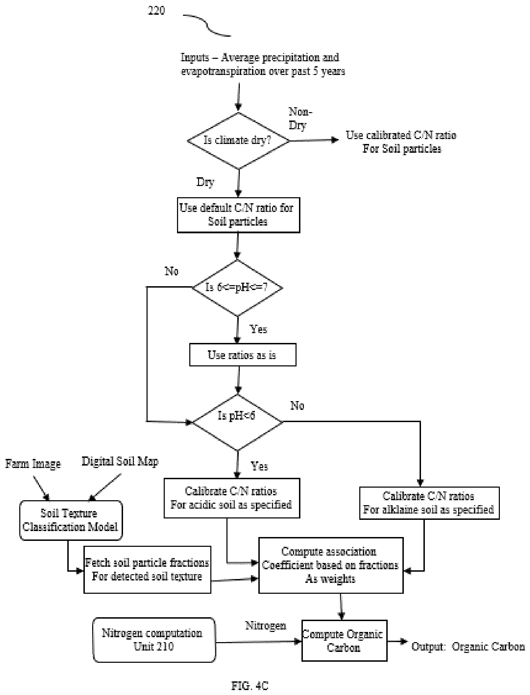

Referring to FIG.4C, the C-N segment 1 is an indicative of presence of tillage and less or no fraction of crop remnants in the crop field. This segment defines a strong stable relationship between soil C-N when there is no impact of farm operations on the soil C-N cycle.

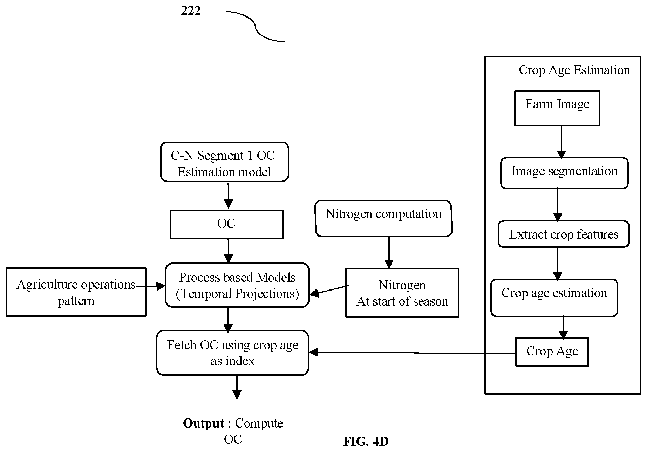

Referring to FIG.4D, the C-N segment 2 is an indicative of unmatured crop growing in the crop field. This segment defined a volatile relationship between nitrogen and carbon, In this C-N relationship is governed by crop, ambient conditions and farm operations.

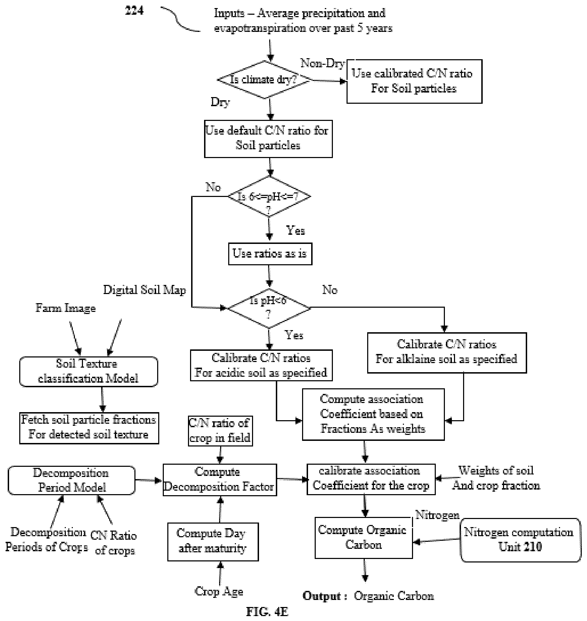

Referring to FIG.4E, the C-N segment 3 is an indicative in at least one of: (i) presence of less fraction or no fraction of crop remnants and no tillage, (ii) presence of large fraction of crop remnants and, (iii) presence of matured crop in the crop field. C-N relation in this segment is stable but the nature of the relationship between C-N is very different from C-N segment 1.

Referring to the steps of the method 300, at step 310 a one or more hardware processor is configured to estimate an organic carbon level of the target crop field based on at least one of carbon-nitrogen relationship segments.

Once the C-N relationship segment is identified for the current crop field , organic carbon level of the target crop field is estimated. The soil organic carbon based on C-N relationship segmentation of the target crop field utilizes a diverse synthesis of learning models and process models to estimate the SOC at the time of field visit. The process models obtains temporal variation of SOC based on crop, ambient conditions and farm operations during active crop period and use crop age estimation models to obtain crop age which will be used as index to fetch current organic carbon (OC) based on daily temporal projection of OC variation.

For example, if the C-N segment-1 (referring now FIG.4C) is identified for the target crop field, the C-N segment-1 220a of the C-N segment classification unit 220 obtains the soil nitrogen level of the soil of the target crop field as input along with an indicative of (i) presence of tillage and (ii) less or no fraction of crop remnants in the crop field. Further, extracting an association coefficient of soil corresponding to soil type of the target crop field using a first predefined nitrogen index table. The first predefined nitrogen index table includes association coefficient of soil corresponding to the soil type. Further, the organic carbon level for the C-N segment-1 is computed by multiplying the soil nitrogen level of the target crop field with the association coefficient of soil.

The first predefined nitrogen index table is constructed for the C-N segment 1 by determining the climate conditions of the target crop field, wherein the climate conditions includes a dry or no dry. Then, C-N ratios for the target crop field are obtained based on the climate conditions. The dry climate conditions utilizes a lower, a middle, and an upper bound thresholds of C-N ratios of soil particles comprising sand, silt, and clay fraction of soil. The no dry climate conditions utilizes default thresholds of C-N ratios soil particles comprising sand, silt, and clay fraction of soil.
For example, The climate zone for the given region is estimated using the below code,

$$if P - AVG < 500mm \lor P - AVG/ET - AVG\,is\,between\,0.03 - 020$$
$$climate = Dry$$
$$else:$$
$$climate = Non - Dry$$
$$If\,climate\,is\,dry\,use\,below\,C/N\,ratios\,for\,sand\,silt \land$$
$$clay\,fraction:$$
$$Ratio - Cl = LBCl, Ratio - Sa = MSa \land Ratio - Si = MSi$$
$$else\,if\,climate\,is\,non - dry\,use\,blow\,C/N\,ratio:$$
$$Ratio - Cl = MCl, Ratio - Sa = MSa \land Ratio - Si = Msi$$

The C-N ratios of soil particles of the target crop field are calibrated based on optimal pH range for various crops. For Example, To further consider the of pH levels and crop maturity on soil below classification is used:

$$if\,pH\,is\,within\,6 - 7\,(optiomal\,for\,most\,crops): Keep\,ratios\,as\,is$$

$$Else\,if\,pH\,is\,within < 6: Update\,ratios\,as\,given\,below:$$

$$fraction = |(pH - 6)|/14$$

$$if(frac * (UBCl - LBCL) + MCl) > UBCl: Ratio - Cl = UBCl\,Else:$$

$$Ratio - Cl = frac * (UBCl - LBCl) + MCl$$

$$if(frac * (UBSa - LBSa) + MSa) > UBSa: Ratio - Sa = UBSa\,Else:$$

$$Ratio - Sa = frac * (UBSa - LBSa) + MSa$$

$$if(frac * (UBSi - LBSi) + MSi) > UBSi: Ratio - Si = UBSi\,Else:$$

$$Ratio - Si = frac * (UBSi - LBSi) + MSi$$

$$Else\,if\,pH\,is\,above\,7: Update\,ratios\,as\,given\,below:$$

$$if(frac * (UBCl - LBCL) - MCl) < LBCl: Ratio - Cl = LBCl\,Else:$$

$$Ratio - Cl = frac * (UBCl - LBCl) - MCl$$

$$if(frac * (UBSa - LBSa) - MSa) < LBSa: Ratio - Sa = LBSa\,Else:$$

$$Ratio - Sa = frac * (UBSa - LBSa) - MSa$$

$$if(frac * (UBSi - LBSi) - MSi) < LBSi: Ratio - Si = LBSi\,Else: Ratio -$$

$$Si = frac * (UBSi - LBSi) - MSi$$

Further, the soil type and the soil texture of the target crop field are estimated using a predefined soil map and captured image of the soil. Then, a soil fraction of sand, silt and clay particles based on the soil type and the soil texture are obtained. For Example, estimation of soil type, soil sub-type and weights for clay, silt, and sand fraction. Here, Based on the target crop field location, the soil type is estimated using a pre-defined soil map. Once, that soil image is captured which is further utilizes as input to the classification model for the soil type. Classification model will provide closest soil sub-type to which capture soil image belongs. Based on the soil sub-type clay, silt and sand fractions for the estimated soil subtypes will be fetched form pre-defined soil texture triangle. This will further act as weights (*WCl, WSi, WSa*) to determine association coefficients in the next step.

Then, association coefficient for the soil of target crop field is determined by multiplying the soil fraction with the C-N calibrated ratios of soil particles. Function of association coefficients of Nitrogen with respect to various soil types such as *f - s*1(*C*1, *C2,* C3 ....) as defined in Equation 2,

$$Y = Ax * N + e\text{----- Equation 2}$$

where *Ax* is an association coefficient of Nitrogen corresponding to organic carbon and corresponding soil types, *N* is a nitrogen value and e is an unpredictable error.

Association coefficient for this C-N segment are driven by the C-N relationship of the soil before season starts.

Estimation of association coefficients for the given soil: Based on C-N ratios of clay, silt, and sand in earlier steps below function will be used to estimate the association coefficient for the given soil as given in Equation 3,

$$Ax = WSa * Ratio - Sa + WCl * Ratio - Cl + WSi * Ratio - Si$$

$$\text{---- Equation 3}$$

Terms and Interpretation:

(1) P-AVG is average precipitation over last 5 cropping years in the region.
(2) P-AVG/ET-AVG is ratio of P-AVG and average evapotranspiration over last five cropping years in the region obtained from nearest weather station data.

(3) Ratio-Cl = C/N ratio of Clay fraction,

(4) Ratio-Si = C/N ratio of Silt fraction,

(5) Ratio-Sa = C/N ratio of Sand fraction,

(6) LB(Cl, Si, Sa) = lower bound C/N Ratio

(7) M(Cl, Si, Sa) = Medium Bound C/N Ratio

(8) UB(Cl, Si, Sa) = Upper bound C/N Ratio

In another embodiment, if the C-N segment-2 220b of the C-N segment classification unit 220 (referring to FIG.4D) is identified for the target crop field then, the C-N segment-2 obtains the soil nitrogen level of the soil. Further, temporal variations of the crop (sowing to maturity) are obtained in the target crop field, and corresponding operation practices for the cropping cycle from sowing to maturity. Then, an organic carbon segment to temporal profile is generated using a process model. Further, a crop age of the crop is obtained in real time and the organic carbon level for the C-N segment 2 is obtained using the organic carbon segment to temporal profile and the crop age. This model is represented as a function $f$ - $(C, N, i)$ where C-N relationship governed by (crop, ambient, operations) where, 'i' is any given day i during the season, $N$ is the N computed for C-N segment 1.

In another embodiment, if the C-N segment 3 (referring now to FIG.4E) is identified for the target crop field, the C-N segment 3 of the C-N segment classification unit 220 estimates the organic carbon level of the crop field. The organic carbon level for C-N segment 3 is determined using the nitrogen level of the soil, and a second predefined nitrogen index table comprising association coefficient of nitrogen level corresponding to soil type and soil textures.

The second predefined nitrogen index table for CN segment 3 is constructed by obtaining a decomposition period of the crop for the target crop field based on a decomposition period model. The crop age, and a number of days after crop maturity are obtained.

Further, a decomposition factor is calculated based on the number of days after crop maturity and a decomposition period of the crop. The decomposition factor is created to represent the relation between C/N rations of crops and period required to for decomposition of crops, this is a function of f(C/N of crops, decomposition period of crops).

The C-N ratios for the target crop field is obtained based on the climate conditions. The dry climate conditions utilizing lower, middle, and upper bound thresholds of C-N ratios of soil particles comprising sand, silt, and clay fraction of soil. The no dry climate conditions utilize default thresholds of C-N ratios soil particles comprising sand, silt, and clay fraction of soil.

The C-N ratios of soil particles of the target crop field are calibrated based on optimal pH range for various crops. After this C/N ratio of the crop in context is fetched from knowledge based and decomposition period is acquired for it from the decomposition composition model. Further, the days after maturity (DAM) are estimated based on the crop age.

Based on the crop and decomposition period and DAM (current time from maturity), calculate the decomposition fraction (Df) as shown below as in Equation 4,

$$Decomposition fraction (Df) = DAM/decomposition\ period\ (days)$$

--- Equation 4

Further, the ratios of CN (segment 1) are estimated using the approach outlined for it earlier. Assign weights to the soil fraction (Ws) and the crop fraction (Wc).

Further, an effective C-N ratio of the crop is determined by multiplying the weights of the crop fraction and the decomposition factor with the C-N ratio of the crop. Based on current decomposition factor, crop C/N ratio and baseline C/N ratio (C-N segment-1) obtained in step-4 calculate current C/N ratio as shown below in Equation 5,

$$Effective\ C/N\ ratio\ (Bx)$$
$$= f(Ws * Ratio - CN(segment - 1) + Wc * Df * Ratio$$
$$- Crop - CN)$$

--- Equation 5

Then, association coefficient for the soil of target crop field of the C-N segment-1 is obtained by multiplying the soil fraction with the C-N calibrated ratios of soil particles. For the C-N segment 2 OC estimation, function of association coefficients of Nitrogen with respect to various soil types as defined in Equation 6,

$$f - s2(C1, C2, C3 \ldots)Y = Bx * N + e \text{ ---- Equation 6}$$

Where, Bx is association coefficient of Nitrogen corresponding to OC and corresponding soil types, N is nitrogen value and e is unpredictable error.

The association coefficient for the C-N segment-3 is determined by summing the effective C-N ratio of the crop with the association coefficient for the soil of target crop field of the C-N segment 1. Here association coefficients are different from association coefficients of the C-N segment 1, association coefficients for this segment are driven by C-N relationship for the harvest ready period.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of soil organic-carbon estimation. The embodiment, thus provides method and system for real-time estimation of soil organic-carbon with multimodal sensing of crop fields. Moreover, the embodiments herein further provides estimation of soil organic carbon in farmer's agricultural field at all cropping stages including in-season periods where organic carbon levels are volatile. The disclosed method is an efficient, accurate and scalable system to estimate soil health.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (300) for real-time estimation of soil organic-carbon, the method comprising:

   receiving (302) via one or more hardware processors, (i) a plurality of digital images of a target crop field captured via an image capturing device, (ii) a location of the target crop field, and (iii) a vegetation indices over two or more previous cropping cycles, wherein the plurality of digital images provides soil information and crops growing in the field;

   computing (304) via the one or more hardware processors, a soil nitrogen level of the target crop field based on geo-spatial profile of neighboring crop field with similar cropping pattern, and the location of the target crop field;

   identifying (306) via the one or more hardware processors, a plurality of features comprising a tillage, one or more crop remnants, and a crop maturity stage of the target crop field from the plurality of digital images;

   determining (308) via the one or more hardware processors, at least one of a carbon-nitrogen relationship segment comprising a C-N segment 1, a C-N segment 2 and a C-N segment 3 of the target crop field from the plurality of features,

      wherein the C-N segment 1 is an indicative of (i) presence of tillage and (ii) less or no fraction of crop remnants in the crop field,

      wherein the C-N segment 2 is an indicative of unmatured crop growing in the crop field,

      wherein the C-N segment 3 is an indicative as at least one of: (i) presence of less fraction or no fraction of crop remnants and no tillage, (ii) presence of large fraction of crop remnants and, (iii) presence of matured crop in the crop field; and

      estimating (310) via the one or more hardware processors, an organic carbon level of the target crop field based on at least one of carbon-nitrogen relationship segments.

2. The processor implemented method as claimed in claim 1, wherein the soil nitrogen level of the target crop field is computed by performing the steps of:

   obtaining a plurality of vegetative indices of two or more neighboring crop fields from a historical database and a vegetative index of the target crop field;

   determining a plurality of cropping patterns of two or more neighboring crop fields based on the plurality of vegetative indices, and a target cropping pattern of the target crop field based on the vegetative index;

   determining a degree of similarity between each cropping pattern of two or more neighboring crop fields with the target crop cropping pattern;

   calculating a plurality of correlation scores based on the variance between each cropping pattern of each neighboring crop field with the target crop field;

   selecting two or more neighboring crop field where each correlation score is greater than a first predefined threshold;

   calculating a monotonic relationship when the two or more selected neighboring crop field are within a second predefined threshold; and

   computing the soil nitrogen level for the target crop field based on the nitrogen level of each selected neighboring crop field having monotonic relationship with corresponding weight, wherein each weight is a distance between each neighboring crop field and the target crop field.

3. The processor implemented method as claimed in claim 1, wherein the organic carbon level estimate for the C-N segment 1 is determined by,

   obtaining the soil nitrogen level of the soil of the target crop field;

   extracting an association coefficient of soil corresponding to soil type of the target crop field using a first predefined nitrogen index table, wherein the first predefined nitrogen index table includes association coefficient of soil corresponding to the soil type; and

   estimating the organic carbon level for the C-N segment 1 by multiplying the soil nitrogen level of the target crop field with the association coefficient of soil.

4. The processor implemented method as claimed in claim 3, wherein the first predefined nitrogen index table is constructed for the C-N segment 1 by,

determining the climate conditions of the target crop field, wherein the climate conditions includes a dry or no dry; obtaining C-N ratios for the target crop field based on the climate conditions,

wherein the dry climate conditions utilizes a lower, a middle, and an upper bound thresholds of C-N ratios of soil particles comprising sand, silt, and clay fraction of soil,
wherein the no dry climate conditions utilizes default thresholds of C-N ratios soil particles comprising sand, silt, and clay fraction of soil;

calibrating the C-N ratios of soil particles of the target crop field based on optimal pH range for various crops; estimating the soil type and the soil texture of the target crop field using a predefined soil map and captured image of the soil, and obtaining a soil fraction of sand, silt and clay particles based on the soil type and the soil texture; and determining association coefficient for the soil of target crop field by multiplying the soil fraction with the C-N calibrated ratios of soil particles.

5. The processor implemented method as claimed in claim 1, wherein the organic carbon level for the C-N segment 2 is computed by,

obtaining the soil nitrogen level estimate of the soil;
obtaining temporal variations of the crop in the target crop field, and corresponding operation practices for the cropping cycle from sowing to maturity;
generating an organic carbon segment 2 temporal profile using a process model;
obtaining a crop age of the crop in real time; and
computing the organic carbon level for the C-N segment 2 using the organic carbon segment 2 temporal profile and the crop age.

6. The processor implemented method as claimed in claim 1, wherein the organic carbon level of the crop field for the C-N segment 3 is determined using the nitrogen level of the soil, and a second predefined nitrogen index table comprising association coefficient of nitrogen level corresponding to soil type and soil textures.

7. The processor implemented method as claimed in claim 5, wherein the second predefined nitrogen index table for CN segment 3 is constructed by,

obtaining a decomposition period of the crop for the target crop field based on a decomposition period model; obtaining, the crop age, and a number of days after crop maturity; calculating a decomposition factor based on the number of days after crop maturity and a decomposition period of the crop; obtaining C-N ratios for the target crop field based on the climate conditions,

wherein for the dry climate conditions utilizing lower, middle, and upper bound thresholds of C-N ratios of soil particles comprising sand, silt, and clay fraction of soil,
wherein for the no dry climate conditions utilize default thresholds of C-N ratios soil particles comprising sand, silt, and clay fraction of soil;

calibrating the C-N ratios of soil particles of the target crop field based on optimal pH range for various crops; determining an effective C-N ratio of the crop by multiplying the weights of the crop fraction and the decomposition factor with the C-N ratio of the crop;
obtaining association coefficient for the soil of target crop field of the C-N segment 1 by multiplying the soil fraction with the C-N calibrated ratios of soil particles; and
determining the association coefficient for the CN-segment 3 by summing the effective C-N ratio of the crop with the association coefficient for the soil of target crop field of the C-N segment 1.

8. A system (100), for real-time estimation of soil organic-carbon comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive (i) a plurality of digital images of a target crop field captured via an image capturing device, (ii) a location of the target crop field, and (iii) a vegetation indices over two or more previous cropping cycles, wherein the plurality of digital images provides soil information and crops growing in the field;

compute a soil nitrogen level of the target crop field based on geo-spatial profile of neighboring crop field with similar cropping pattern, and the location of the target crop field;

determine at least one of a carbon-nitrogen relationship segments comprising a C-N segment 1, a C-N segment 2 and a C-N segment 3 of the target crop field from the plurality of features,

wherein the C-N segment 1 is an indicative of (i) presence of tillage and (ii) less or no fraction of crop remnants in the crop field,

wherein the C-N segment 2 is an indicative of unmatured crop growing in the crop field,

wherein the C-N segment 3 is an indicative as at least one of: (i) presence of less fraction or no fraction of crop remnants and no tillage, (ii) presence of large fraction of crop remnants and, (iii) presence of matured crop in the crop field; and

estimate an organic carbon level of the crop field based on at least one of carbon-nitrogen relationship segments.

9. The system as claimed in claim 8, wherein the soil nitrogen level of the target crop field is computed by performing the steps of:

obtaining a plurality of vegetative indices of two or more neighboring crop fields from a historical database and a vegetative index of the target crop field;

determining a plurality of cropping patterns of two or more neighboring crop fields based on the plurality of vegetative indices, and a target cropping pattern of the target crop field based on the vegetative index;

determining a degree of similarity between each cropping pattern of two or more neighboring crop fields with the target crop cropping pattern;

calculating a plurality of correlation scores based on the variance between each cropping pattern of each neighboring crop field with the target crop field;

selecting two or more neighboring crop field where each correlation score is greater than a first predefined threshold;

calculating a monotonic relationship when the two or more selected neighboring crop field are within a second predefined threshold; and

compute the soil nitrogen level for the target crop field based on the nitrogen level of each selected neighboring crop field having monotonic relationship with corresponding weight, wherein each weight is a distance between each neighboring crop field and the target crop field.

10. The system as claimed in claim 8, wherein the organic carbon level for the C-N segment 1 is estimated by,

obtaining the soil nitrogen level estimate of the soil of the target crop field;

extracting an association coefficient of soil corresponding to soil type of the target crop field using a first predefined nitrogen index table, wherein the first predefined nitrogen index table includes association coefficient of soil corresponding to the soil type; and

estimating the organic carbon level for the C-N segment 1 by multiplying the soil nitrogen level of the target crop field with the association coefficient of soil.

11. The system as claimed in claim 10, wherein the first predefined nitrogen index table is constructed for the C-N segment 1 by,

determining the climate conditions of the target crop field, wherein the climate conditions includes a dry or no dry; obtaining C-N ratios for the target crop field based on the climate conditions,

wherein the dry climate conditions utilizes a lower, a middle, and an upper bound thresholds of C-N ratios of soil particles comprising sand, silt, and clay fraction of soil,

wherein the no dry climate conditions utilizes default thresholds of C-N ratios soil particles comprising sand, silt, and clay fraction of soil;

calibrating the C-N ratios of soil particles of the target crop field based on optimal pH range for various crops; estimating the soil type and the soil texture of the target crop field using a predefined soil map and captured image of the soil, and obtaining a soil fraction of sand, silt and clay particles based on the soil type and the soil texture; and determining association coefficient for the soil of target crop field by multiplying the soil fraction with the C-N calibrated ratios of soil particles.

12. The system as claimed in claim 8, wherein the organic carbon level estimate for the C-N segment 2 is determined by,

obtaining the soil nitrogen level estimate of the soil;
obtaining temporal variations of the crop in the target crop field, and corresponding operation practices for the cropping cycle from sowing to maturity;
generating an organic carbon segment 2 temporal profile using a process model;
obtaining a crop age of the crop in real time; and
estimating the organic carbon level for the C-N segment 2 using the organic carbon segment 2 temporal profile and the crop age.

13. The system as claimed in claim 8, wherein the organic carbon level of the crop field for the C-N segment 3 is estimated using the nitrogen level of the soil, and a second predefined nitrogen index table comprising association coefficient of nitrogen level corresponding to soil type and soil textures.

14. The system as claimed in claim 8, wherein the second predefined nitrogen index table for CN segment 3 is constructed by,

obtaining a decomposition period of the crop for the target crop field based on a decomposition period model;
obtaining, the crop age, and a number of days after crop maturity; calculating a decomposition factor based on the number of days after crop maturity and a decomposition period of the crop;
obtaining C-N ratios for the target crop field based on the climate conditions,

wherein for the dry climate conditions utilizing lower, middle, and upper bound thresholds of C-N ratios of soil particles comprising sand, silt, and clay fraction of soil,
wherein for the no dry climate conditions utilize default thresholds of C-N ratios soil particles comprising sand, silt, and clay fraction of soil;
calibrating the C-N ratios of soil particles of the target crop field based on optimal pH range for various crops;
determining an effective C-N ratio of the crop by multiplying the weights of the crop fraction and the decomposition factor with the C-N ratio of the crop;
obtaining association coefficient for the soil of target crop field of the C-N segment 1 by multiplying the soil fraction with the C-N calibrated ratios of soil particles; and
determining the association coefficient for the CN-segment 3 by summing the effective C-N ratio of the crop with the association coefficient for the soil of target crop field of the C-N segment 1.

15. One or more non-transitory machine-readable information storage mediums comprising one or more instructions which when executed by one or more hardware processors cause:

receiving (i) a plurality of digital images of a target crop field captured via an image capturing device, (ii) a location of the target crop field, and (iii) a vegetation indices over two or more previous cropping cycles, wherein the plurality of digital images provides soil information and crops growing in the field;
computing a soil nitrogen level of the target crop field based on geo-spatial profile of neighboring crop field with similar cropping pattern, and the location of the target crop field;
identifying a plurality of features comprising a tillage, one or more crop remnants, and a crop maturity stage of the target crop field from the plurality of digital images;
determining at least one of a carbon-nitrogen relationship segment comprising a C-N segment 1, a C-N segment 2 and a C-N segment 3 of the target crop field from the plurality of features,

wherein the C-N segment 1 is an indicative of (i) presence of tillage and (ii) less or no fraction of crop remnants in the crop field,
wherein the C-N segment 2 is an indicative of unmatured crop growing in the crop field,
wherein the C-N segment 3 is an indicative as at least one of: (i) presence of less fraction or no fraction of crop remnants and no tillage, (ii) presence of large fraction of crop remnants and, (iii) presence of matured crop in the crop field; and

estimating an organic carbon level of the target crop field based on at least one of carbon-nitrogen relationship segments.

**100**

Crop field images

No Crop

Standing Crop

Crop Remnants

Crop field sensor data

Crop field data

Geo-spatial sensor

Smartphone

Grower/ Farmer

Data storage /cloud

System

102

**FIG. 1**

**System 102**

| Hardware Processor(s) 204 | I/O Interface(s) 206 |

**Memory 202**

**Modules 208**

Nitrogen computation unit **210**

Crop detection unit **212**

Crop Remnants Classification unit **214**

Crop Maturity Detection unit **216**

Tillage detection Unit **218**

C-N segment classification unit **220**

| C-N segment 1 | C-N segment 2 | C-N segment 3 |

**FIG. 2**

**300**

receive (i) a plurality of digital images of a target crop field captured via an image capturing device, (ii) a location of the target crop field, and (iii) a vegetation indices over two or more previous cropping cycles, wherein the plurality of digital images provides soil information and crops growing in the field

**302**

compute a soil nitrogen level of the target crop field based on geo-spatial profile of neighboring crop field with similar cropping pattern, and the location of the target crop field

**304**

identify a plurality of features comprising a tillage, one or more crop remnants, and a crop maturity stage of the target crop field from the plurality of digital images

**306**

determine at least one of a carbon-nitrogen relationship segment comprising a C-N segment 1, a C-N segment 2 and a C-N segment 3 of the target crop field from the plurality of features

**308**

estimate an organic carbon level of the target crop field based on at least one of carbon-nitrogen relationship segments

**310**

**FIG.3**

EP 4 627 903 A1

Crop field images

| No Crop | Standing Crop | Crop Remnants |

Input - Capture Farm Image via phone located on Day x

Nitrogen computation Unit 210

Crop detection unit 212

Crop Maturity detection Unit 216

Is crop detected

No Active Crop

Crop Remnants Classification unit 214

Is crop mature?

Growing Crop

Type of crop remnants

large fraction of Crop Remnants

less/no fraction of Crop Remnants

Harvest Ready Crop

C-N Classification unit C-N Segment 2 220b

Tillage detection Unit 218

Is tillage detected

No Tillage

C-N Classification unit C-N Segment 3 220c

Tillage

C-N Classification unit C-N Segment 1 220a

FIG. 4A

19

| Does phone have spectral capability? | Yes |
| --- | --- |

No

| Fetch n year vegetation Index and N data of neighbouring farms |
| --- |

| Capture spectral Image of Soil |
| --- |

| Calculate correlation score based on vegetation index and distance from farm |
| --- |

| Compute nitrogen using Spectral Nitrogen Estimation Model |
| --- |

| Correlation Score computation |
| --- |

**Output: Nitrogen**

| Compute Nitrogen using correlation score |
| --- |

**Output: Nitrogen**       **FIG. 4B**

220

Inputs – Average precipitation and
evapotranspiration over past 5 years

Is climate dry?

Non-Dry → Use calibrated C/N ratio
For Soil particles

Dry

Use default C/N ratio for
Soil particles

Is 6<=pH<=7

No

Yes

Use ratios as is

Is pH<6

No

Farm Image    Digital Soil Map

Soil Texture
Classification Model

Yes

Calibrate C/N ratios
For acidic soil as specified

Calibrate C/N ratios
For alklaine soil as specified

Fetch soil particle fractions
For detected soil texture

Compute association
Coefficient based on fractions
As weights

Nitrogen computation
Unit 210

Nitrogen

Compute Organic
Carbon

Output: Organic Carbon

FIG. 4C

**222**

**Crop Age Estimation**

Farm Image

↓

Image segmentation

↓

Extract crop features

↓

Crop age estimation

↓

Crop Age

C-N Segment 1 OC
Estimation model

↓

OC

Nitrogen computation

↓

Agriculture operations
pattern → Process based Models
(Temporal Projections) ← Nitrogen
At start of season

↓

Fetch OC using crop age
as index ←

↓

**Output :** Compute
OC

**FIG. 4D**

**224**

Inputs – Average precipitation and evapotranspiration over past 5 years

Is climate dry? — Non-Dry → Use calibrated C/N ratio For Soil particles

Dry ↓

Use default C/N ratio for Soil particles

Is 6<=pH<=7 ? — No

Yes ↓

Use ratios as is

Is pH<6 ? — No → Calibrate C/N ratios For alklaine soil as specified

Digital Soil Map

Farm Image

Yes ↓

Calibrate C/N ratios For acidic soil as specified

Soil Texture classification Model

Fetch soil particle fractions For detected soil texture

C/N ratio of crop in field

Compute association Coefficient based on Fractions As weights

Decomposition Period Model → Compute Decomposition Factor → calibrate association Coefficient for the crop

Weights of soil And crop fraction

Decomposition Periods of Crops    CN Ratio of crops

Compute Day after maturity

Compute Organic Carbon — Nitrogen ← Nitrogen computation Unit 210

Crop Age

**Output :** Organic Carbon

FIG. 4E

Europäisches
Patentamt

European
Patent Office

Office européen
des brevets

## EUROPEAN SEARCH REPORT

**Application Number**

EP 25 16 1444

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUNKEL V R ET AL: "Modelling soil organic carbon using vegetation indices across large catchments in eastern Australia", SCIENCE OF THE TOTAL ENVIRONMENT, ELSEVIER, AMSTERDAM, NL, vol. 817, 30 December 2021 (2021-12-30), XP086974427, ISSN: 0048-9697, DOI: 10.1016/J.SCITOTENV.2021.152690 [retrieved on 2021-12-30] * chapters 1, 2.1, 2.2, 2.4, 2.6, 2.9, 4.1 * | 1-15 | INV. A01C21/00 |
| A | US 2023/334852 A1 (WANG SHENG [US] ET AL) 19 October 2023 (2023-10-19) * paragraphs [0063], [0064], [0077], [0078]; figures 1A-11 * | 1,8 | |
| A | US 2022/138767 A1 (ASHTEKAR JENETTE M [US] ET AL) 5 May 2022 (2022-05-05) * paragraphs [0097], [0102] * | 1,8 | |

**TECHNICAL FIELDS SEARCHED (IPC)**

A01C
A01B
G06V

The present search report has been drawn up for all claims

| Place of search | Date of completion of the search | Examiner |
|---|---|---|
| The Hague | 23 July 2025 | Reininghaus, F |

## ANNEX TO THE EUROPEAN SEARCH REPORT
## ON EUROPEAN PATENT APPLICATION NO.

EP 25 16 1444

This annex lists the patent family members relating to the patent documents cited in  the above-mentioned European search report.
The members are as contained in the European Patent Office EDP file on
The European Patent Office is in no way liable for these particulars which are merely given for the purpose of information.

23-07-2025

| Patent document cited in search report | Publication date | Patent family member(s) | | Publication date |
|---|---|---|---|---|
| US 2023334852 A1 | 19-10-2023 | US | 2023334852 A1 | 19-10-2023 |
| | | WO | 2022011236 A2 | 13-01-2022 |
| US 2022138767 A1 | 05-05-2022 | NONE | | |

EPO FORM P0459

For more details about this annex : see Official Journal of the European Patent Office, No. 12/82

**REFERENCES CITED IN THE DESCRIPTION**

**Patent documents cited in the description**

- IN 202421016167